# EUROPÄISCHE PATENTSCHRIFT

(11) **EP 2 986 461 B1**
(45) Veröffentlichungstag und Bekanntmachung des Hinweises auf die Patenterteilung: **11.04.2018**
(21) Anmeldenummer: 14730417.4
(22) Anmeldetag: 12.05.2014
(51) Int. Cl.: B60J 7/10, B65D 41/32

(54) **BEFESTIGUNGSEINRICHTUNG FÜR EINE PLANE**
FASTENING DEVICE FOR A TARPAULIN
DISPOSITIF DE FIXATION D'UNE BÂCHE

(30) Priorität: 17.05.2013 DE 202013004681 U
(43) Veröffentlichungstag der Anmeldung: 24.02.2016
(73) Patentinhaber: European Trailer Systems GmbH, 47441 Moers (DE)
(72) Erfinder: REMMEL, Roger, 42897 Remscheid (DE)
(74) Vertreter: Sparing, Rolf Klaus
(86) Internationale Anmeldenummer: PCT/DE2014/000239
(87) Internationale Veröffentlichungsnummer: WO 2014/183739

(56) Entgegenhaltungen:
- WO-A1-2004/009250
- DE-A1- 19 839 769
- DE-A1- 19 923 976
- DE-U1- 20 303 884
- GB-A- 2 199 571
- US-A- 1 904 122

## Beschreibung

Die Erfindung betrifft eine Befestigungseinrichtung für eine Plane.

Aus der Praxis sind Verdeckaufbauten bekannt, bei denen insbesondere die Dachplane des Verdeckaufbaus an den Spriegeln oder an Rollenwagen der Spriegel über einen Gewindeschaft und beispielsweise eine Schraubenmutter oder durch einen leicht ersetzbaren Blindniet befestigt sind. Hierbei werden die Niete in der Regel von außen zur Vereinfachung der Montage angebracht. Nachteilig bei den bekannten Befestigungseinrichtungen ist der Umstand, dass diese sich ohne Spuren von unbefugten Personen demontieren lassen. Insbesondere bei Verdeckaufbauten, die nach Abnahme durch den Zoll verplombt eine Gewähr dafür liefern sollen, dass keine Zu- oder Entladung stattgefunden hat, reichen solche Befestigungseinrichtungen nicht aus, und würden ein vergleichsweise aufwendiges einzelnes Verplomben uns späteres Kontrollieren jeder einzelnen Befestigungsstelle erfordern.

Aus der Praxis sind Befestigungseinrichtungen für eine Plane eines Planenaufbaus bekannt, bei denen ein Schlittenteil eines Spriegels, eine Öse der Plane und ein topfförmiges Haubenteil von einem Schaftteil durchgriffen werden, wobei das Schaftteil an seinem dem Schlittenteil abgekehrten Ende mit einem Nietbuchse verbunden ist, die das Haubenteil und die Öse an das Schlittenteil festlegt (sogenannter Maxlock-Niet). Hierbei wird das nach außen weisende Ende des Schaftteils bei der Vernietung der Nietbuchse abgerissen. Um eine Manipulation sichtbar zu machen ist es erforderlich, die Nietbuchse an das Schaftteil mit einem Schweißpunkt anzuschweißen, was eine aufwändige Handhabung erfordert, die zudem die Plane verunreinigen kann.

DE 203 03 884 U1 beschreibt eine Befestigungseinrichtung für eine Plane eines Planenaufbaus, bei der eine Metallkappe an das Schaftteil angeschlossen wird. Die Handhabung ist aufwändig und die Teile sind teuer in der Herstellung.

GB 2 199 571 A beschreibt einen Schraubverschluss aus Kunststoff für eine Flasche, der einen mit einem Innengewinde ausgestatteten Abdeckbereich aufweist, der mit einem Ringbereich gekoppelt ist, wobei der Ringbereich einen äußeren Ring und einen inneren Ring aufweist, die über Verbindungsstege miteinander gekoppelt sind. Die Verbindungsstege ermöglichen ein Aufweiten des mit einem Schlitz versehenen inneren Rings beim Aufsetzen auf eine Flasche, wobei sich der innere Ring nach dem Aufweiten wieder auf sein Ausgangsmaß zurückverformt. Wird der Schraubverschuss geöffnet, verbleibt der innere Ring an einer Stufe der Flasche und reißt von dem mit der Abdeckkappe verbundenen äußeren Ring ab.

US 1 904 122 A beschreibt eine Verbindung zweier Materiallagen mittels einer in der einen Materiallage eingesetzten Öse und eines an der anderen Materiallage befestigten ersten Teils eines Druckknopfes, wobei der erste Teil des Druckknopfes die Öse durchsetzt, und wobei ein zweites Teil des Druckknopfes die Öse ebenfalls durchsetzt und an dem ersten Teil klemmend festgelegt ist.

WO 2004 009 250 A1 beschreibt einen Farbroller mit einer bügelartig gebogenen Metallstange und einer Aufnahme für eine zylindrische Walze zum Auftragen von Farbe auf Wänden und dergleichen, wobei die Walze zwischen zwei Lagerstücken aufnehmbar ist, von denen das eine Lagerstück ein kappenartiges Teil aufweist, das auf ein stirnseitiges Ende des Bügels aufschiebbar ist und oval ausgeformte Nuten des Bügels überdeckt. Ein weiteres Teil des Lagerteils ist bezüglich des Kappenteils drehbar gelagert und stützt die Walze seitlich ab.

DE 198 39 769 A1 beschreibt eine Planenbefestigung, die eine mit eine Öse sowie einer Ausbauchung versehene Plane mittels eines Blindniets an eine Endkappe eines Spriegels anschließt.

DE 199 23 976 A1 beschreibt eine verschiebbare Seitenplane eines Planenaufbaus, die an einer Laufrolle mittels eines Befestigungselements angeschlossen ist, wobei die Laufrolle an einem Abschnitt eines Längsträgers des Planenaufbaus abgestützt ist, der bezüglich des Längsträgers verschwenkbar ist und ein Anheben von Laufrolle und Seitenplane in einer Offenstellung ermöglicht.

BE 10 20 771 A3 bzw. EP 2 679 423 A1 (jeweils nachveröffentlicht) zeigt eine Befestigungseinrichtung für eine Plane, welche mittels Tragrollen an einem Schlittenteil horizontal auf einer Schiene verschiebbar ist. Das Schlittenteil weist eine Bohrung und die Plane weist eine Öse auf. Die Bohrung und die Öse können von einem Schaftteil durchsetzt werden, so dass die Plane und das Schaftteil gegenseitig fixiert werden können. Das Schaftteil weist an einem Ende einen Kopf und am anderen Ende einen konischen Verlauf auf; zwischen dem Kopf und dem anderen Ende ist eine Einkerbung in das Schaftteil eingearbeitet. Auf der einen Seite ist das Schaftteil dadurch fixiert, dass der Kopf einen größeren Umfang als die Öse und die Bohrung aufweist und auf der konischen Seite ist das Schaftteil dadurch fixiert, dass es innerhalb eines topfförmigen Haubenteils angeordnet ist, in welchem sich eine Metallfeder mit einem ringförmigen Ende befindet. Gegenüber dem ringförmigen Ende dieser Feder kann das konische Ende des Schaftteils in eine Richtung verschoben werden, wobei sich das ringförmige Ende mittels der konischen Form des Schaftteiles nachgiebig ausdehnt; schließlich verrastet das ringförmigen Ende der Feder Richtung in der Einkerbung, so dass das Schaftteil in der anderen Richtung fixiert ist und ohne Beschädigung der Befestigungseinrichtung nicht mehr entfernt werden kann. Eine Sicherungskappe ist auf das topfförmige Haubenteil aufgesetzt und fixiert die Feder in einer axialen Richtung.

Es ist die Aufgabe der Erfindung, eine Befestigungseinrichtung für eine Plane anzugeben, die eine zuverlässige Befestigung der Plane an einen Spriegel und insbesondere eine effektive Kontrolle der Manipulation der Befestigungseinrichtung ermöglicht.

Diese Aufgabe wird erfindungsgemäß durch eine Befestigungseinrichtung mit den Merkmalen des Anspruchs 1 gelöst.

Die erfindungsgemäße Befestigungseinrichtung für eine Plane eines Planenaufbaus weist ein Schaftteil auf, das ein Schlittenteil eines Spriegels, eine Öse einer Plane und ein topfförmiges Haubenteil durchgreift, wobei das Schaftteil an seinem dem Schlittenteil abgekehrten Ende mit einer Nietbuchse verbunden ist, die das Haubenteil und die Öse an das Schlittenteil festlegt. Der Anschluss der Nietbuchse an das Schaftteil, eines sogenannten Maxlock-Niets, erfolgt dadurch, dass ein Werkzeug sich an dem dem Schlittenteil abgekehrten Ende des Schaftteils abstützt und die Nietbuchse, deren Innenumfang mit einer Rändelung oder dergleichen versehen ist, mit dem Schaftteil verpresst wird zur Herstellung einer nicht lösbaren Verbindung. Die Nietbuchse weist wenigstens einen Stufenabschnitt auf, hinter dem ein Ringbereich einer Sicherungskappe verrastbar angeordnet ist. Durch das Verrasten des Ringbereichs der Sicherungskappe hinter dem Stufenabschnitt entsteht ein vorteilhafter Formschluss, der verhindert, dass der hinter dem Stufenabschnitt gefangene Ringbereich aus seiner Lage herausgezogen werden kann. Zugleich ermöglicht der Ringbereich vorteilhaft, dass die Sicherungskappe, die das Schaftteil radial umgibt, um die Achse des Schaftteils gedreht werden kann, wodurch in einfacher Weise geprüft werden kann, dass die Sicherheitskappe unversehrt ist und funktioniert. Die in dem topfförmigen Haubenteil angeordnete Sicherungskappe ermöglicht sowohl eine optische als auch eine haptische Funktionskontrolle, ob an der Befestigungseinrichtung für die Plane manipuliert wurde.

Vorzugsweise umschließt das Haubenteil den Ringbereich derart, dass bei Abreißen des Ringbereichs von der Sicherungskappe der Ringbereich nicht zugänglich ist, so dass der Ringbereich weder entfernt noch ein weiterer Ringbereich in den zwischen Haubenteil und Schaftteil vorgesehenen Ringspalt eingeführt werden kann. Um den Ringbereich günstig einzuführen, ist die dem Aufnahmeraum für den Ringbereich der Sicherungskappe abgekehrte Kante des Stufenabschnitts mit einer konischen Schräge ausgestattet, die ein Übergleiten des Ringbereichs zulässt.

Es ist möglich, den Stufenabschnitt der Nietbuchse nicht vollständig umlaufend auszubilden, beispielsweise um den Blick auf den Ringbereich zuzulassen. Vorzugweise ist aber vorgesehen, dass der Stufenabschnitt den Ringbereich zumindest überwiegend übergreift, beispielsweise dergestalt, dass der Ringbereich als geschlossen umlaufender radialer Flansch ausgebildet ist, der den Ringbereich zumindest überwiegend, z.B. innenseitig radial, übergreift und damit diesen gegen ein axiales Herausziehen ohne Vernichtung der mit dem Ringbereich verbundenen Stege verhindert.

Vorzugsweise ist der Ringbereich mit einem Abdeckbereich der Sicherungskappe über wenigstens zwei, vorzugsweise aber drei oder vier Stege verbunden, die zugleich eine Sollbruchstelle der Sicherungskappe aufweisen oder bilden. Hierbei kann der Ringabschnitt zusätzliche Haltemittel wie Widerhaken oder sich abspreizende Lamellen aufweisen, die den Eingriff mit dem Stufenabschnitt verstärken, so dass bei Ziehen des Abdeckbereichs mit einer einen Schwellenwert überschreitenden Kraft Sollbruchlinien im Bereich der Stege oder der Verbindungen der Stege mit dem Ringabschnitt abgerissen oder abgeschert werden. Wird der Abdeckbereich mit einer schwachen Kraft abgehoben, um zu prüfen, ob die Stege bzw. deren Sollbruchstellen noch Bestand haben, kann die Unversehrtheit der Sicherungskappe insgesamt überprüft werden, so dass sich neben dem Drehtest ein Ziehtest durchführen lässt.

Um zu vermeiden, dass Gegenstände unter den Abdeckbereich der Sicherungskappe gelangen können, ist vorzugsweise vorgesehen, dass der Abdeckbereich der Sicherungskappe weitgehend bündig mit einem Kragen des topfförmigen Haubenteils ausgebildet ist, wobei das topfförmige Haubenteil hierbei den im Wesentlichen runden Rand des Abdeckbereichs radial umgibt bzw. einfasst. Hierbei ist der Abdeckbereich der Sicherungskappe zweckmäßigerweise mit einer Sphäre ausgebildet, bei der der Mittelpunkt des Abdeckbereichs den am weitesten vorstehenden Teil des Abdeckbereichs bildet, während der Randbereich dem gegenüber in Richtung auf das Schlittenteil eingezogen ist, wodurch wenig Angriffsfläche für Beschädigungen und Verunreinigungen gegeben sind. Besonders bevorzugt ist die Sphäre konkav ausgebildet.

Gemäß einer bevorzugten Ausgestaltung ist vorgesehen, dass der Abdeckbereich der Sicherungskappe wenigstens ein Sichtfenster aufweist, durch das eine Sichtkontrolle der Befestigungseinrichtung möglich ist. Vorzugsweise sind sogar zwei oder drei Sichtfenster vorgesehen, jedoch bevorzugt wenigstens zwischen zwei benachbarten Stegen ein Sichtfenster, die eine optische Achse von einem außenstehenden Betrachter zu dem Bereich der Stege, der mit dem Ringbereich verbunden ist, zulassen, so dass jeder einzelne Steg auf Beschädigungen untersucht werden kann. Auch Abdrücke von Werkzeugen, mit denen an der Sicherungskappe manipuliert wurde, können so leicht erfasst werden. Außerdem lassen die Sichtfenster einen ausreichenden Zugang für eine endoskopische Kamera, die beispielsweise an einer Prüfeinrichtung vorgesehen ist, zu. Das Sichtfenster kann aus durchsichtigem Kunststoff ausgebildet sein, was den Zugang von Verunreinigungen zu dem topfförmigen Haubenteil beschränken würde. Hierbei kann das Fenster vorteilhaft von der Fensteröffnung abgehoben und an dieser zugeordneten Mitteln wieder verclipst werden. Zweckmäßigerweise ist aber vorgesehen, dass das Sichtfenster als Durchbrechung in dem Material des Abdeckbereichs der Sicherungskappe ausgebildet ist, so dass durch das Sichtfenster auch Dreck und Wasser ausgeblasen werden kann, und ferner ein Werkzeug oder dergleichen eingeführt werden kann, um ein Drehmoment auf die Sicherungskappe aufzubringen, um deren Verdrehbarkeit zu prüfen.

Gemäß einer bevorzugten Ausgestaltung weist der Abdeckbereich der Sicherungskappe wenigstens eine Vertiefung auf, die eine Beaufschlagung des Abdeckbereichs zur Überprüfung der Drehbarkeit und Abziehbarkeit ermöglicht. Hierbei handelt es sich vorzugsweise um die ausgesparten Sichtfenster, durch die zum einen ein Werkzeug zum Aufbringen eines Drehmoments eingeführt werden kann, das Werkzeug aber auch den Abdeckbereich hintergreifen und eine geringe Kraft aufbringen kann, um zu prüfen ob die Verbindungsstege zu dem Ringbereich bestand haben oder nicht. Vorzugsweise ist dies durch eine Prüfeinrichtung gegeben, die entsprechend in die Vertiefung eingreift.

Gemäß einer besonders bevorzugten Ausgestaltung ist die Sicherungskappe als Spritzgussteil aus Kunststoff hergestellt, so dass die einteilige Herstellung eine besonders zuverlässige Prüfung auf Beschädigungen ermöglicht. Insbesondere lässt sich die Sicherungskappe, die als Spritzgussteil aus Kunststoff hergestellt ist, nicht ohne Weiteres reparieren, so dass ein zollsicherer Verschluss gegeben ist. Gemäß einer besonders bevorzugten Ausgestaltung ist die Sicherungskappe insgesamt oder teilweise aus einem transparenten Kunststoff hergestellt, wodurch die optische Kontrolle vereinfacht ist und zugleich Manipulationen besonders leicht erkennbar sind. Bei einigen transparenten Kunststoffen können Beschädigungen aus Manipulationen auch durch Beleuchtung mit gerichtetem Licht gut sichtbar gemacht werden, insbesondere dann, wenn zugleich eine mechanische Beanspruchung des Kunststoffs erfolgt, wodurch eine besonders zuverlässige Prüfung möglich ist. Hierbei kann der Ring beispielweise zur besseren Erkennbarkeit farbig abgesetzt sein. Alternativ kann in dem Abdeckbereich auch eine Sicherheitsmarkierung wie beispielweise ein Hologramm eingebracht sein.

Das Schaftteil ist zweckmäßigerweise auf einer der Plane abgekehrten Seite des Schlittenteils eingesetzt und weist hierzu auf dieser abgekehrten Seite des Schlittenteils einen Kopf auf, der einen Anschlag bildet, wobei der Kopf nach dem Einfädeln des Schlittenteils auf ein entsprechendes Längsträgerprofil von außen nicht mehr zugänglich ist.

Vorzugseise weist die Plane einen Saum auf, in dem ein Stahlseil geführt ist, das den Zugang zu dem Verdeck, insbesondere das Eindringen einer Hand oder eines Werkzeuges unter die Plane, verhindert.

Gemäß einer bevorzugten Ausgestaltung weist der Ringbereich einen Verstärkungsring aus Metall auf, der auch nach Art eines Sprengrings ausgeführt sein kann und der den Ringbereich zusätzlich in seiner eingeführten Position gegen Ausreißen sichert.

Gemäß einer bevorzugten Weiterbildung ist vorgesehen, dass die Sicherungskappe einen Transponder enthält, der vorzugsweise einen Speicher mit berührungslos auslesbaren Informationen aufweist. Der Transponder kann vor den Einbau der Sicherungskappe mit spezifischen Informationen zu dem Planenaufbau, aber auch zu dem Datum der Herstellung und anderen Informationen ausgestattet sein, wie das Datum der letzten Vollprüfung und dergleichen. Durch den Transponder ist einfach möglich, Manipulationen an der Sicherungskappe nachzuvollziehen, insbesondere den Austausch einer Sicherungskappe nachzuweisen. Kann der Datenspeicher des Transponders auch beschriftet werden, können interessierende Daten wie Datum und Ort eines Grenzübertritts gespeichert werden.

Hierbei kann zweckmäßig vorgesehen sein, dass ein Antennendraht des Transponders durch einen Sollbruchbereich der Sicherungskappe gelegt ist, beispielsweise durch einen oder mehrere der Stege, so dass bei Zerstörung des Sollbruchbereichs die Funktion des Transponders bleibend zerstört wird. Hierdurch wird eine zusätzliche Kontrolle für denjenigen Fall eingeführt, dass eine zerstörte Sicherungskappe ähnlich einer funktionierenden Sicherungskappe erneut in Position platziert ist.

Auch das Schaftteil oder das Haubenteil können einen Teil des Transponders bilden, der bei Entfernung der Sicherungskappe zerstört wird. Ferner kann der Sicherungskappe auch ein Sensor zugeordnet sein, mit dem Feldeigenschaften überwacht werden, z.B. die Annäherung einer benachbarten Sicherungskappe, wodurch insbesondere erfasst und festgehalten werden kann, ob das Verdeck in einem bestimmten Zeitraum geöffnet wurde oder nicht.

Eine Sicherungskappe zum Einsatz in einer Befestigungsvorrichtung zeichnet sich dadurch aus, dass die Sicherungskappe einen Ringbereich und einen Abdeckbereich aufweist, die über mehrere Stege miteinander verbunden sind, wobei der Abdeckbereich an einer Aufnahmeöffnung des Haubenteils der Befestigungseinrichtung angepasst ist, wobei bevorzugte Ausgestaltungen und Weiterbildungen vorstehend bereits erläutert sind, wie beispielsweise dass die Sicherungskappe aus Kunststoff hergestellt ist.

Eine Prüfeinrichtung für eine Befestigungseinrichtung zeichnet sich dadurch aus, dass ein Prüfglied der Prüfeinrichtung an die Sicherungskappe anschließbar ist und Sicherheitsmerkmale der Sicherungskappe berührend oder berührungslos erfasst. Insbesondere kann die Prüfeinrichtung Mittel aufweisen, die die Drehbarkeit der Sicherungskappe überprüfen, ebenso die Befestigung des Abdeckbereichs an den Ringbereich durch Aufbringen einer entsprechenden Zugkraft. Weiterhin kann ein Datenspeicher berührungslos oder berührend ausgelesen werden und hierdurch beispielsweise überprüft werden, ob alle Verbindungsstege zu dem Ringbereich bestehen. Schließlich kann die Prüfeinrichtung auch eine endoskopische Kamera und eine Lichtquelle enthalten, die eine optische Prüfung der Befestigungseinrichtung zulassen.

Weitere Vorteile, Merkmale, Eigenschaften und Weiterbildungen der Erfindung ergeben sich aus den abhängigen Ansprüchen sowie aus der nachstehenden Beschreibung eines bevorzugten Ausführungsbeispiels.

Die Erfindung wird nachstehend unter Bezugnahme auf die Zeichnungen anhand eines bevorzugten Ausführungsbeispiels näher erläutert.
- Fig. 1: zeigt einen Querschnitt durch ein bevorzugtes Ausführungsbeispiel einer erfindungsgemäßen Befestigungsvorrichtung im Einbauzustand.
- Fig. 2: zeigt einen Querschnitt durch teile der Befestigungsvorrichtung aus Fig. 1.

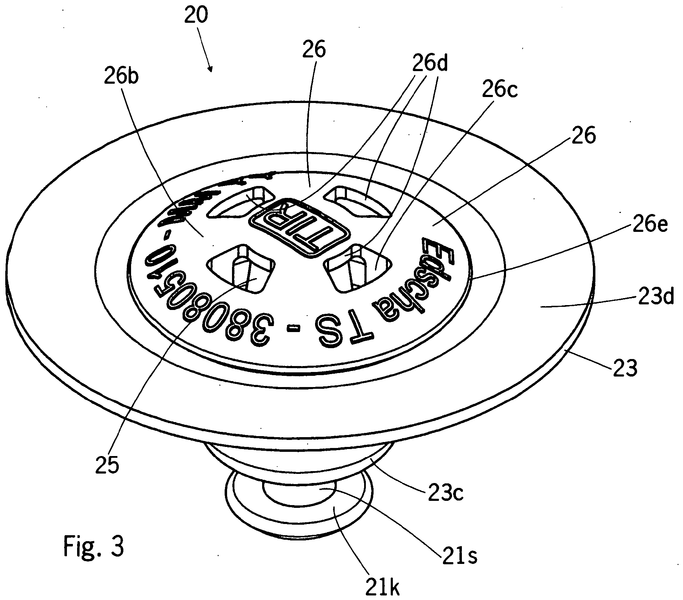

- Fig. 3: zeigt eine Seitenansicht der Befestigungsvorrichtung aus Fig. 1.
- Fig. 4: zeigt eine perspektivische Ansicht der Sicherungskappe aus Fig. 1.

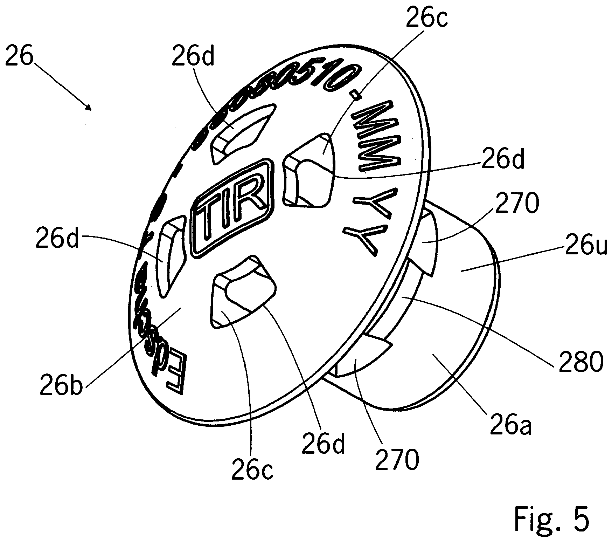

- Fig. 5: zeigt eine weitere perspektivische Ansicht der Sicherungskappe aus Fig. 4.

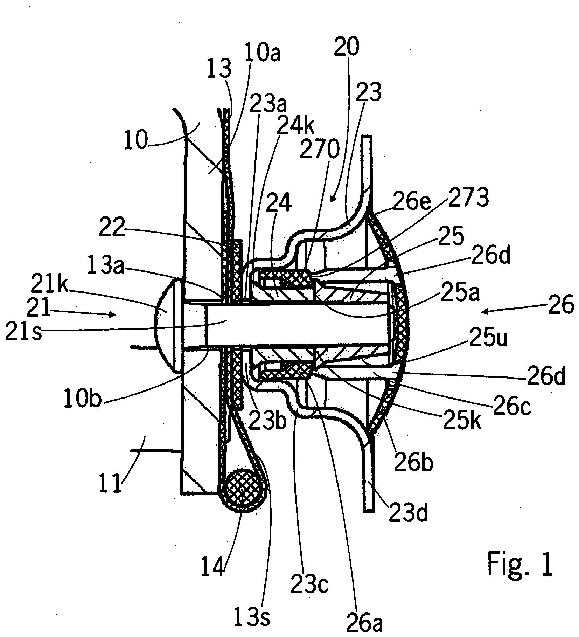

Aus Fig. 1 ist der Ausschnitt eines Schlittens 10 dargestellt, der sich über eine Tragrolle 11, von der nur der Lagerzapfen gezeigt ist, auf einem nicht dargestellten Längsträger abstützt. Die nach außen weisende Stirnseite 10a des Schlittens 10 wird von einer Plane 13 bedeckt, die an ihrem unteren Rand einen Saum 13s aufweist, in den ein Drahtseil 14 geführt ist. Die Plane weist in einem doppelt gelegten Bereich eine Öse 13a auf, mit der die Plane 13 über eine Befestigungseinrichtung 20 an den Schlitten 10 angeschlossen ist.

Die Befestigungseinrichtung 20 umfasst ein Schaftteil 21 mit einem Kopf 21k, der eine entsprechende Bohrung 10b in der Stirnseite 10s des Schlittenteils 10 durchsetzt, wobei der Kopf 21k in Anlage mit der inneren Seite der Stirnseite 10s gelangt. Der Schaftabschnitt des Schaftteils 21 durchsetzt ferner die Öse 13a der Dachplane 13, die hierzu mit einem Verstärkungsring verstärkt sein kann. Anschließend durchsetzt das Schaftteil 21 einen Belagring 22 sowie den mit einer Bohrung 23a versehenen Boden 23b eines topfförmigen Haubenteils 23 aus Metall.

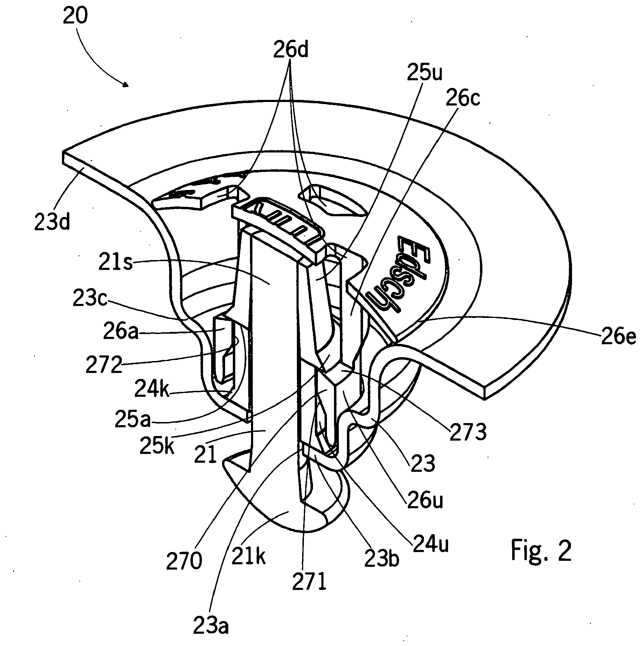

Auf der Innenseite des topfförmigen Haubenteils 23 sind zwei Nietbuchsen 24, 25 geworfen, von denen die äußere Nietbuchse 25 nach Art eines so genannten Maxlock-Niets mit dem Schaftabschnitt 21s des Schaftteils 21 verstemmt bzw. vernietet ist, und der überstehende Teil des Schaftabschnitt 21s des Schaftteils 21 an seinem dem Kopf 21k abgekehrten Ende hierbei abgerissen ist. Die untere Nietbuchse 24 ist nicht mit dem Schaftteil 21 verbunden und hat eher die Funktion eines Unterlegteils, so dass diese auch durch eine andere Buchsenart ersetzt werden kann. Die äußere Nietbuchse 25 weist einen umlaufenden konisch gestuften Abschnitt 25k auf, der insbesondere in Fig. 2 gut zu erkennen ist, der auf der nach innen, also zum Schlittenteil weisenden Seite einen glatten umlaufenden Anschlag 25a bildet. Man erkennt ferner, dass durch Deformation zur Vernietung an das Schaftteil 21 die Mantelfläche bzw. der Umfang 25u der Nietbuchse 25 konisch deformiert ist, während der Umfang der Nietbuchse 24 mit Ausnahme der konischen Erweiterung 24k im Wesentlichen zylindrisch ist.

Das topfförmige Haubenteil 23 weist zwei Ringstufen 23c, 23d auf, die sich im Wesentlichen parallel zu dem Grund 23b erstrecken. Die äußere Ringstufe 23d bildet eine Art Flansch der tellerartig das Drahtseil 14 überspannt und verhindert, dass dieses von dem Schlittenteil 10 abgehoben wird. Die mittlere Ringstufe 23c ist etwas unterhalb des Kragens 25k der Nietbuchse 25 angeordnet und begrenzt zusammen mit der hinteren Nietbuchse 24 einen Ringspaltbereich, der schwer zugänglich ist, zumal er von dem umlaufenden Anschlag 25a noch teilweise axial überdeckt ist.

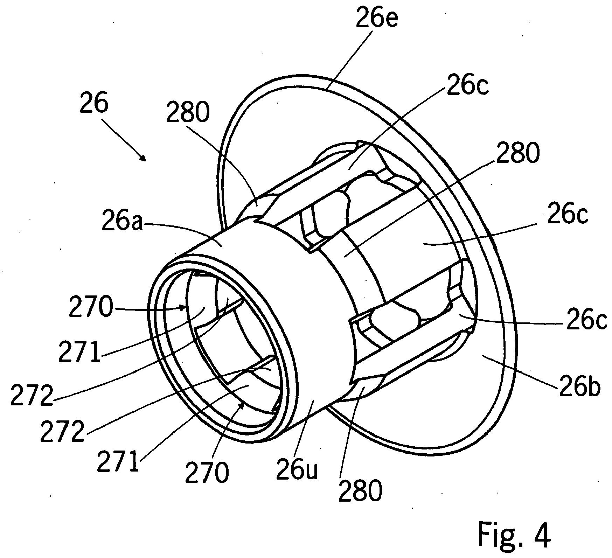

Auf die aus Schaftteil 21, der Nietbuchse 25, sowie dem topfförmigen Haubenteil 23 gebildete Baueinheit ist eine Sicherungskappe 26 aufgeschoben, die einen Ringbereich 26a und einen Abdeckbereich 26b umfasst, die über insgesamt vier Stege 26c miteinander verbunden sind, die in der geschnittenen Darstellung gemäß Fig. 1 nicht geschnitten, sondern in Seitenansicht gezeigt sind; die Stege 26c sind in Fig. 2 und 4 gut erkennbar. Durchbrechungen 26d in dem Abdeckbereich 26b der Sicherungskappe 26 geben den Einblick auf das Innenleben der Befestigungseinrichtung 20 und ihrer Komponenten jeweils partiell frei, und ermöglichen das Einführen eines Werkzeugs, mit dem die Sicherungskappe 26 gedreht werden kann und festgestellt werden kann, ob der Abdeckbereich 26a der Sicherungskappe 26 noch in fester Verbindung sämtlicher Stege 26c mit dem Ringbereich 26a steht. Ferner erkennt man in Fig. 2, dass der Abdeckbereich 26b der Sicherungskappe 26 ballig geformt ist und in der Mitte seinen maximal vorstehenden Bereich aufweist, während der kreisförmige Rand 26e eingezogen ist und nahezu in Anlage mit einem inneren Rand des topfförmigen Haubenteils 23 gelangt.

Der Ringbereich 26a weist einen äußeren geschlossenen Ring 26u auf, der sich im unteren Bereich ein wenig einwärts in verjüngt. Im Innenumfang des Ringbereichs 26a sind in denjenigen Bereichen, die jeweils zwischen der Verlängerung der Stege 26c angeordnet sind, zur Hauptachse der Sicherungskappe 26 vorstehende Führungsabschnitte 270 ausgeformt, die eine Einführschräge 271 aufweisen, mit der die Führungsabschnitte 270 über den Kragen 25k der Nietbuchse 25 geschoben werden können, und die weiterhin einen als Abschnitt eines Zylinders ausgebildete Führungsfläche 272 aufweisen, die in Anlage mit dem zylindrischen Außenumfang 24u der hinteren Nietbuchse 24 gelangen und ein ohne Schmierung funktionierendes Drehlager bilden, das eine Verdrehung der Sicherungskappe 26 um den zylindrischen Außenumfang 24u der hinteren Nietbuchse 24 ermöglichen. Hierzu sind vorliegend vier Führungsabschnitte 270 mit Führungsflächen 272 vorgesehen, aber auch mit zwei oder drei Führungsflächen würde sich bereits eine gute radiale Abstützung ergeben.

Der Ringbereich 26a kann leicht in den zwischen dem Haubenteil 23 und der Niethülse 25 gebildeten Ringspaltbereich dadurch eingeführt werden, dass die Einführschrägen 271 des Ringbereich 26a unter Ausnutzung der elastischen Deformation des Ringbereich 26a über die Schräge des konischen Kragens 25k der Nietbuchse 25 gedrückt werden, wodurch die leicht konische obere Stirnseite 273 der Führungsabschnitte 270 gegen den einen Stufenabschnitt bildenden Anschlag 25a einrückt und dort formschlüssig gehalten ist.

Im Bereich des Übergangs der Stege 26c zu dem Ringbereich 26a weisen die Stege 26c eine Abschrägung 280 auf, die die Stege 26c gezielt schwächt und eine Sollbruchstelle am Übergang der Stege 26c zu dem Ringbereich 26a bildet. Wird mit einer zunehmenden Kraft oder mit einer ruckartigen Kraft an dem Abdeckbereich 26b der Sicherungskappe 26 gezogen, wird bei Überschreiten einer Grenzlast die Sollbruchstelle zwischen dem Steg 26c und dem Ringbereich 26a abreißen, da der Ringbereich 26a durch den Anschlag 25a daran gehindert ist, aus dem Ringaufnahmeraum herausgezogen zu werden. Dies gilt selbst dann, wenn bei niedrigen Temperaturen das Kunststoffmaterial, aus dem die Sicherungskappe 26 hergestellt ist, weniger duktil ist, oder bei hohen Temperaturen das Kunststoffmaterial aus dem die Sicherungskappe 26 hergestellt ist, zur Deformation neigt.

In der Darstellung der Sicherungskappe 26 aus Fig. 4 erkennt man auch gut, dass die Durchbrechungen 26d der Sicherungskappe 26 eine optische Kontrolle der Verbindung der Stege 26c mit dem Ringabschnitt 26a ermöglichen. Ferner kann über die Durchbrechungen 26d ein Werkzeug, insbesondere ein Prüfglied einer Prüfeinrichtung, angeschlossen werden, das die Drehbarkeit und die Befestigung des Abdeckbereichs 26b prüft, und darüber hinaus mittels einer endoskopischen Kamera auch das Innenleben, das von dem Abdeckbereich 26b überspannt wird, optisch inspizieren kann.

Die Befestigungseinrichtung wird wie folgt hergestellt: Die Sicherungskappe 26 wird nach dem Verbinden des Schaftteils 21 mit dem als Rollenwagen ausgebildeten Schlitten 10, der Plane 13, der Belagscheibe 22, die auch entfallen kann, und des Haubenteils 23 durch Vernieten der Nietbuchse 25 an den Schaftabschnitt 21s des Schaftteils 21 über den mit der Nietbuchse 25 versehenen Schaftabschnitt 21s geschoben, bis der Ringabschnitt 26a der Sicherungskappe 26 über den Kragen 25k der Nietbuchse 25 übergleitet und die leicht konische Stirnseite 273 der Führungsabschnitte 270 hinter den Anschlag 25a der Nietbuchse 25 verrastet. Dann ist die Sicherungskappe 26 um die hintere Nietbuchs 24 bzw. den Schaftabschnitt 21s des Schaftteils 21 drehbar, der Ringabschnitt 26a kann aber nicht mehr durch Ziehen aus dem Ringspaltbereich herausgezogen werden, vielmehr verbleibt er nicht entfernbar eingeklemmt dort, wenn die Verbindungsstege 26c der Sicherungskappe 26 bei Überschreiten einer Grenzlast zusammen mit dem Abdeckbereich 26b abreißen.

Damit eignet sich die Befestigungseinrichtung als zuverlässiger Unversehrtheitsnachweis bei Planenaufbauten für Nutzfahrzeuge im Straßen- und Schienenverkehr, so dass ohne einzelne Verplombung der Befestigungseinrichtung ein zollsicheres Verdeck geschaffen ist, das schnell überprüft und abgefertigt werden kann.

Die Erfindung ist vorstehend anhand eines Ausführungsbeispiels erläutert worden, bei dem die Sicherungskappe 26 vollständig aus Kunststoff im Spritzgussverfahren hergestellt wurde. Es versteht sich, dass es auch möglich ist, metallische Teile, insbesondere an dem Ringabschnitt, anzuschließen, um noch besser sicherzustellen, dass der Ringabschnitt nicht aus dem Ringaufnahmeraum ausgehebelt werden kann.

Die Erfindung ist vorstehend anhand eines Ausführungsbeispiels erläutert worden, bei dem zwei Nietbuchsen 24, 25 übereinander auf dem Schaftabschnitt des Schaftteils 21 aufgebracht sind, von denen die eine 25 mit dem Schaftabschnitt vernietet ist. Es versteht sich, dass die hintere, nicht mit dem Schaftteil verbundene Nietbuchse 24 auch durch einen Unterlegring oder eine Distanzhülse ersetzt sein kann.

Die Erfindung ist vorstehend Anhand eines Ausführungsbeispiels erläutert worden, bei dem der Stufenabschnitt durch einen radial vorstehenden Kragenabschnitt 25k der Nietbuchse 25 gebildet ist. Es versteht sich, dass der Stufenabschnitt auch durch die Stirnseite 25a der Nietbuchse 25 gebildet sein kann, wenn darunter eine Distanzhülse angeordnet ist, die einen geringeren Außendurchmesser aufweist, so dass die Nietbuchse 25 nicht zwangsläufig einen Kragen aufzuweisen braucht.

## Patentansprüche

1. Befestigungseinrichtung für eine Plane (13) eines Planenaufbaus, bei dem ein Schlittenteil (10) eines Spriegels, eine Öse (13a) der Plane (13) und ein topfförmiges Haubenteil (23) von einem Schaftteil (21) durchgriffen sind, **dadurch gekennzeichnet, dass** das Schaftteil (21) an seinem dem Schlittenteil (10) abgekehrten Ende mit einer Nietbuchse (25) verbunden ist, die das Haubenteil (23) und die Öse (13a) an das Schlittenteil (10) festlegt, und dass die Nietbuchse (25) wenigstens einen Stufenabschnitt (25a) aufweist, hinter den ein Ringbereich (26a) einer Sicherungskappe (26) verrastbar anordenbar ist.

2. Befestigungseinrichtung nach Anspruch 1, **dadurch gekennzeichnet,**
**dass** das Haubenteil (23) den Ringbereich (26a) derart umschließt, dass bei Abreißen des Ringbereichs (26a) von der Sicherungskappe (26) weder der Ringbereich (26a) entfernt noch ein weiterer Ringbereich eingeführt werden kann.

3. Befestigungseinrichtung nach Anspruch 1 oder 2, **dadurch gekennzeichnet, dass** der Stufenabschnitt (25a) den Ringbereich (26a) zumindest überwiegend übergreift.

4. Befestigungseinrichtung nach einem der vorhergehenden Ansprüche,
**dadurch gekennzeichnet, dass** der Ringbereich (26a) mit einem Abdeckbereich (26b) der Sicherungskappe (26) über wenigstens zwei, vorzugsweise aber drei oder vier Stege (26c) verbunden ist, die eine Sollbruchstelle der Sicherungskappe (26) aufweisen, begrenzen oder bilden.

5. Befestigungseinrichtung nach Anspruch 4, **dadurch gekennzeichnet,**
**dass** der Abdeckbereich (26b) der Sicherungskappe (26) weitgehend bündig mit einem Kragen (23d) des topfförmigen Haubenteils (23) ausgebildet ist, um ein Eindringen in den Bereich hinter den Abdeckbereich (26b) zu erschweren.

6. Befestigungseinrichtung nach Anspruch 4 oder 5, **dadurch gekennzeichnet, dass** der Abdeckbereich (26b) der Sicherungskappe (26) wenigstens ein Sichtfenster (26d) aufweist, durch das eine Sichtkontrolle von zumindest Teilen der Befestigungseinrichtung möglich ist.

7. Befestigungseinrichtung nach einem der Ansprüche 4 bis 6, **dadurch gekennzeichnet, dass** der Abdeckbereich (26b) der Sicherungskappe (26) wenigstens eine Vertiefung (26d) aufweist, die eine Beaufschlagung des Abdeckbereichs (26b) zur Überprüfung ihrer Drehbarkeit und Abziehbarkeit ermöglicht.

8. Befestigungseinrichtung nach einem der vorhergehenden Ansprüche,
**dadurch gekennzeichnet, dass** die Sicherungskappe (26) um das Schaftteil (21) drehbar ist.

9. Befestigungseinrichtung nach einem der vorhergehenden Ansprüche,
**dadurch gekennzeichnet, dass** die Sicherungskappe (26) als Spritzgussteil aus Kunststoff hergestellt ist.

10. Befestigungseinrichtung nach einem der vorhergehenden Ansprüche,
**dadurch gekennzeichnet, dass** das Schaftteil (21) auf einer der Plane (13) abgekehrten Seite des Schlittenteils (10) eingesetzt ist und auf dieser abgekehrten Seite einen Kopf (21k) aufweist.

11. Befestigungseinrichtung nach einem der vorhergehenden Ansprüche,
**dadurch gekennzeichnet, dass** die Plane (13) einen Saum (13s) aufweist, in dem ein Stahlseil (14) geführt ist.

12. Befestigungseinrichtung nach einem der vorhergehenden Ansprüche,
**dadurch gekennzeichnet, dass** der Ringbereich (26a) einen Verstärkungsring aus Metall aufweist.

13. Befestigungseinrichtung nach einem der vorhergehenden Ansprüche,
**dadurch gekennzeichnet, dass** die Sicherungskappe (26) einen Transponder enthält, der einen Speicher mit berührungslos auslesbaren Informationen enthält.

14. Befestigungseinrichtung nach Anspruch 13, **dadurch gekennzeichnet,**
**dass** ein Antennendraht des Transponders durch einen Sollbruchbereich (26c, 280) der Sicherungskappe (26) gelegt ist, dass bei Zerstörung des Sollbruchbereichs (26c, 280) die Funktion des Transponders bleibend zerstört wird, und dass das Schaftteil (21) und/oder das Haubenteil (23) einen Teil des Transponders bilden, der bei Entfernung der Sicherungskappe (26) zerstört wird.

15. Befestigungseinrichtung nach einem der vorhergehenden Ansprüche,
**dadurch gekennzeichnet,**
**dass** eine Sicherungseinrichtung an Nietbuchse (25) und/oder Schaftteil (21) anschließbar ist, und dass die Sicherungseinrichtung einen Transponder aufweist, durch den Manipulation oder Beschädigung oder Unversehrtheit der Sicherungseinrichtung anzeigbar ist.

## Claims

1. Fastening device for a tarpaulin (13) of a tarpaulin structure, in which a carriage part (10) of a hoop, an eye (13a) of the tarpaulin (13) and a pot-shaped hood part (23) are traversed by a shaft part (21),
**characterized in**
**that** the shaft part (21) is connected at its end averted from the shaft part (10) to a rivet bushing (25) which fixes the hood part (23) and the eye (13a) to the carriage part (10), and
**that** the rivet bushing (25) has at least one step portion (25a) behind which a ring region (26a) of a securing cap (26) can be arranged in a latchable manner.

2. Fastening device according to claim 1, **characterized in that** the hood part (23) encloses the ring region (26a) in such a way that, in the case of the ring region (26a) being torn off the securing cap (26), neither the ring region (26a) can be removed nor a further ring region inserted.

3. Fastening device according to claim 1 or 2, **characterized in that** the step portion (25a) at least for the most part engages over the ring region (26a).

4. Fastening device according to one of the preceding claims, **characterized in that** the ring region (26a) is connected to a covering region (26b) of the securing cap (26) via at least two, but preferably three or four, webs (26c) which have, delimit or form a predetermined breaking point of the securing cap (26).

5. Fastening device according to claim 4, **characterized in that** the covering region (26b) of the securing cap (26) is designed to be substantially flush with a collar (23d) of the pot-shaped hood part (23) in order to make it more difficult to intrude into the region behind the covering region (26b).

6. Fastening device according to claim 4 or 5, **characterized in that** the covering region (26b) of the securing cap (26) has at least one inspection window (26d) through which a visual monitoring of at least parts of the fastening device is possible.

7. Fastening device according to one of claims 4 to 6, **characterized in that** the covering region (26b) of the securing cap (26) has at least one depression (26d) which allows the covering region (26b) to be acted upon in order to check its rotatability and detachability.

8. Fastening device according to one of the preceding claims, **characterized in that** the securing cap (26) is rotatable about the shaft part (21).

9. Fastening device according to one of the preceding claims, **characterized in that** the securing cap (26) is produced as an injection-moulded part of plastic.

10. Fastening device according to one of the preceding claims, **characterized in that** the shaft part (21) is inserted on a side of the carriage part (10) that is averted from the tarpaulin (13) and has a head (21k) on this averted side.

11. Fastening device according to one of the preceding claims, **characterized in that** the tarpaulin (13) has a seam (13s) in which a steel cable (14) is guided.

12. Fastening device according to one of the preceding claims, **characterized in that** the ring region (26a) comprises a reinforcing ring of metal.

13. Fastening device according to one of the preceding claims, **characterized in that** the securing cap (26) contains a transponder which contains a memory with contactlessly readable information.

14. Fastening device according to claim 13, **characterized in that** an antenna wire of the transponder is laid through a predetermined breaking region (26c, 280) of the securing cap (26), that, upon destruction of the predetermined breaking region (26c, 280), the function of the transponder is permanently destroyed, and that the shaft part (21) and/or the hood part (23) form or forms a part of the transponder which is destroyed upon removal of the securing cap (26).

15. Fastening device according to one of the preceding claims,
**characterized in**
**that** a securing device can be connected to the rivet bushing (25) and/or shaft part (21), and that the securing device has a transponder by means of which manipulation of or damage to or the integrity of the securing device can be indicated.

## Revendications

1. Dispositif de fixation d'une bâche (13) d'une structure de bâche dans laquelle un élément formant glissoir (10) d'un arceau, un oeillet (13a) de la bâche (13) et un élément formant capot (23) en forme de pot sont traversés par un élément formant tige (21),
**caractérisé en ce**
**que** l'élément formant tige (21) est relié par son extrémité opposée à l'élément formant glissoir (10) à une douille de rivet (25) qui maintient l'élément formant capot (23) et l'oeillet (13a) à l'élément formant glissoir (10), et
**que** la douille de rivet (25) comporte au moins une partie en gradin (25a) en arrière de laquelle une zone annulaire (26a) d'un capuchon de protection (26) peut être disposée de façon encliquetable.

2. Dispositif de fixation selon la revendication 1, **caractérisé en ce que** l'élément formant capot (23) entoure la zone annulaire (26a) de telle sorte que, lorsque la zone annulaire (26a) est arrachée du capuchon de protection (26), on ne peut ni enlever la zone annulaire (26a) ni introduire une autre zone annulaire.

3. Dispositif de fixation selon la revendication 1 ou 2, **caractérisé en ce que** la partie en gradin (25a) s'engage par-dessus la zone annulaire (26a) au moins de manière prédominante.

4. Dispositif de fixation selon l'une des revendications précédentes,
**caractérisé en ce que** la zone annulaire (26a) est reliée à une zone de recouvrement (26b) du capuchon de protection (26) par au moins deux, mais de préférence trois ou quatre, nervures (26c) qui comportent, délimitent ou forment un point de moindre résistance mécanique du capuchon de protection (26).

5. Dispositif de fixation selon la revendication 4, **caractérisé en ce que** la zone de recouvrement (26b) du capuchon de protection (26) est conçue pour venir dans une large mesure à fleur d'une collerette (23d) de l'élément formant capot (23) en forme de pot afin de rendre plus difficile l'introduction dans la zone située en arrière de la zone de recouvrement (26b).

6. Dispositif de fixation selon la revendication 4 ou 5, **caractérisé en ce que** la zone de recouvrement (26b) du capuchon de protection (26) comporte au moins une fenêtre d'inspection (26d) permettant de contrôler visuellement au moins des éléments du dispositif de fixation.

7. Dispositif de fixation selon l'une des revendications 4 à 6, **caractérisé en ce que** la zone de recouvrement (26b) du capuchon de protection (26) comporte au moins un évidement (26d) qui permet de solliciter la zone de recouvrement (26b) pour vérifier sa capacité à tourner et sa capacité à être retiré.

8. Dispositif de fixation selon l'une des revendications précédentes,
**caractérisé en ce que** le capuchon de protection (26) est apte à tourner sur l'élément formant tige (21).

9. Dispositif de fixation selon l'une des revendications précédentes,
**caractérisé en ce que** le capuchon de protection (26) est réalisé en matière plastique sous la forme d'une pièce moulée par injection.

10. Dispositif de fixation selon l'une des revendications précédentes,
**caractérisé en ce que** l'élément formant tige (21) est inséré du côté de l'élément formant glissoir (10) qui est opposé à la bâche (13) et comporte une tête (21k) sur ce côté opposé.

11. Dispositif de fixation selon l'une des revendications précédentes,
**caractérisé en ce que** la bâche (13) comporte une couture (13s) dans laquelle est guidé un câble en acier (14).

12. Dispositif de fixation selon l'une des revendications précédentes,
**caractérisé en ce que** la zone annulaire (26a) comporte une bague de renforcement en métal.

13. Dispositif de fixation selon l'une des revendications précédentes,
**caractérisé en ce que** le capuchon de protection (26) contient un transpondeur qui contient une mémoire comportant des informations lisibles sans contact.

14. Dispositif de fixation selon la revendication 13, **caractérisé en ce qu'**un fil d'antenne du transpondeur est placé à travers une zone de moindre résistance mécanique (26c, 280) du capuchon de protection (26), que la fonction du transpondeur est définitivement détruite lorsque la zone de moindre résistance mécanique (26c, 280) est arrachée, ce que l'élément formant tige (21) et/ou l'élément formant capot (23) forment une partie du transpondeur qui est détruite lorsque le capuchon de protection (26) est retiré.

15. Dispositif de fixation selon l'une des revendications précédentes,
**caractérisé en ce que**
un moyen de protection peut être raccordé à la douille de rivet (25) et/ou à l'élément formant tige (21) et que le moyen de protection comporte un transpondeur par lequel peut être indiqué la manipulation ou l'endommagement ou l'intégrité du moyen de protection.
